(19) **Europäisches Patentamt / European Patent Office / Office européen des brevets**

(11) **EP 2 120 472 A1**

(12) **EUROPEAN PATENT APPLICATION**
published in accordance with Art. 153(4) EPC

(43) Date of publication:
**18.11.2009 Bulletin 2009/47**

(21) Application number: **08700612.8**

(22) Date of filing: **08.01.2008**

(51) Int Cl.:
*H04Q 7/34* *(0000.00)*

(86) International application number:
**PCT/CN2008/000052**

(87) International publication number:
**WO 2008/083613 (17.07.2008 Gazette 2008/29)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **10.01.2007  CN 200710000656**

(71) Applicant: **Huawei Technologies Co., Ltd.**
**Shenzhen, Guangdong Province  518129 (CN)**

(72) Inventor: **CHEN, Yanyan**
**Shenzhen**
**Guangdong 518129 (CN)**

(74) Representative: **Epping - Hermann - Fischer**
**Patentanwaltsgesellschaft mbH**
**Ridlerstrasse 55**
**80339 München (DE)**

(54) **METHOD, SYSTEM AND APPARATUS FOR MEASUREMENT OCCASION SCHEDULING**

(57)    Method, system and apparatus for scheduling measurement occasion are disclosed herein. The method includes: a base station reserving resource for an MS in the Cell_FACH state to perform measurement on a HS-DSCH, and delivering the information of the reserved information of the reserved resource to the MS; the base station scheduling no data for the MS in the Cell_FACH state in the reserved resource. The system includes a base station and an MS in the Cell_FACH state. The base station includes a resource reservation module, a control information delivering module, and a data scheduling module. The MS includes a scheduling information receiving module and a measuring module. The problem is avoided that losing data in the process of performing inter-frequency and/or inter-system measurement.

Figure 1

**Description**

FIELD OF THE INVENTION

The present invention relates to telecommunication technologies, and in particular, to method, system and apparatus for scheduling measurement occasion.

BACKGROUND

For a Mobile Station (MS), measurement is an important action. In a measurement process, a Radio Resource Control (RRC) unit in a Radio Network Controller (RNC) controls the measurement, and the measurement control information is signaled to the MS through an RRC message or a broadcasted System Information message. The measurement control information specifies the measurement type (such as intra-frequency measurement, inter-frequency measurement, inter-system measurement, traffic measurement, quality measurement, and location measurement), measurement cycle, and measurement reporting conditions (periodical reporting or event-triggered reporting). The MS performs measurement according to the measurement type specified in the measurement control information, and reports the measurement to the RNC when the conditions of reporting the measurement are fulfilled. The Radio Resource Management (RRM) unit in the RNC makes a decision according to the reported measurement, and notifies the decision result to the RRC unit. The RRC unit controls the radio resources properly according to the decision result.

For an MS in the Cell Forward Access Channel (Cell_FACH) state, cell selection and cell reselection need to be performed through continuous measurement of signal quality of the neighbor cells, so that the MS can camp on a cell with the best signal quality. Moreover, the uplink traffic needs to be measured to decide whether it is necessary to change the state from Cell_FACH state into the Cell Dedicated Channel (Cell_DCH) state.

In the conventional art, the MS in the Cell_FACH state monitors the data delivered from the Secondary Common Control Physical Channel (SCCPCH) continuously, and cannot receive the data from a High Speed Downlink Shared Channel (HS-DSCH). Only the MS in the Cell_DCH state can receive data from the HS-DSCH. A base station schedules the data of the MS which is in the Cell_DCH state, for example, sending the data on the HS-DSCH and sending control information (e.g., decoding information) of decoding the HS-DSCH on the High Speed Shared Control Channel (HS-SCCH). The MS in the Cell_DCH state monitors the HS-SCCH continuously. When the MS discovers its own identifier, e.g., H-RNTI, in the control information of the HS-SCCH, the MS knows that the HS-DSCH carries the data of the MS, and therefore receives the data from the HS-DSCH. However, the MS with a single receiver in the Cell_FACH state is unable to perform inter-frequency and/or inter-system measurement while receiving the data from the SCCPCH. Therefore, the network must enable the MS to perform inter-frequency and/or inter-system measurement in the transmission intervals by scheduling the measurement occasion. That is, the network needs to decide the parameters related to the measurement occasion in order to reach a consensus with the MS on which frames are used for delivering data, and which frames are used for inter-frequency and/or inter-system measurement.

The method for scheduling the measurement occasion of an MS in the Cell_FACH state in the conventional art is elaborated hereinafter.

The RNC configures "FACH measurement occasion cycle length coefficient" in the broadcasted System Information message and allocates a Cell-Radio Network Temporary Identifier (C-RNTI) to the MS. Through the following equation, the MS in the Cell_FACH state and the RNC determine which system frames are used for inter-frequency and/or inter-system measurement rather than data transmission.

$$\text{SFN div } N = \text{C\_RNTI mod M\_REP} + n * \text{M\_REP}$$

where,

- N is the TTI (in number of 10ms frames) of the FACH having the largest TTI on the SCCPCH;
- C_RNTI is a variable value stored by the MS and allocated by the RNC;
- M_REP is a measurement occasion cycle length, $M\_REP = 2^k$, where k is the FACH measurement occasion cycle length coefficient configured in " System Information Block type 11" or " System Information Block type 12"; and
- n = 0, 1, 2..., as long as System Frame Number (SFN) is below its maximum value.

In the frame(s) with the SFN value fulfilling the foregoing equation, the RNC does not send data to the MS identified as C-RNTI on the SCCPCH. Meanwhile, according to the equation, the MS knows that no data is delivered to the MS in the frame(s) beforehand. Therefore, the MS uses the measurement occasion to perform inter-frequency and/or inter-system measurement, and resumes monitoring and receiving the data transmitted on the SCCPCH after the measurement occasion.

The 32nd plenary session of the 3GPP Radio Access Network (RAN) puts forward a Work Item (WI) of Cell_FACH state enhancement under Frequency Division Duplex (FDD). With support of most manufacturers, this WI is enacted. The main objectives of the WI are to:

1) increase the transmission bit rate of the MS in the Cell_FACH state;
2) decrease the delay of the user plane and control plane of the MS in the Cell_FACH, in the Cell_Paging Channel (Cell_PCH) state, and in the UTRAN Registration Area_Paging Channel (URA_PCH) state, through a higher data transmission rate;
3) decrease the delay of the MS which changes the state from Cell_FACH, Cell_PCH and URA_PCH state to the Cell_DCH state; and
4) allow the MS in the Cell_FACH state to fulfill lower power consumption through discontinuous receiving.

According to discussions so far, a mainstream solution to the foregoing WI is to let the MS in the Cell_FACH state increase the transmission bit rate through the High Speed Downlink Packet Access (HSDPA) technology, namely, let the data of the MS in the Cell_FACH state be transmitted on the HS-DSCH. Taking advantage of the high transmission rate, the HSDPA technology increases the data transmission rate of the MS in the Cell_FACH state greatly. However, the HSDPA technology employed by the MS in the Cell_FACH state brings some problems to measurement of the UE.

In the conventional art, the endpoint of the FACH/SCCPCH used by the MS in the Cell_FACH state is RNC, e.g., the RNC is responsible for scheduling the data on the channel. The base station is only a physical-layer transmission channel, and does not need to know the measurement occasion or know which SFNs are for transmitting data. However, in order to fulfill the foregoing WI, the MS in the Cell_FACH state needs to receive the data on the HS-DSCH, but the protocol endpoint of the HS-DSCH is the base station. The base station needs to reschedule the data from the RNC to the HS-DSCH, and transmit the data to the MS. The base station does not negotiate an occasion of inter-frequency and/or inter-system measurement with the MS. Therefore, the base station does not know which HS-DSCH frames are not for transmitting data but for vacating an occasion for the MS in the Cell_FACH state to perform inter-frequency and/or inter-system measurement. Consequently, the MS in the Cell_FACH state performs inter-frequency and/or inter-system measurement may lead to loss of receiving data.

SUMMARY

Various embodiments of the present invention provide a method, system, and apparatus for scheduling measurement occasion in order to overcome loss of data, while the MS in Cell_FACH state performs inter-frequency and/or inter-system measurement based on the HSDPA technology.

A method for scheduling measurement occasion in an embodiment of the present invention includes: reserving, by a base station, resource on the HS-DSCH for an MS in the Cell_FACH state to perform measurement; delivering the information of the reserved resource to the MS in the Cell_FACH state; and not scheduling data for the MS in the Cell_FACH state in the reserved resource.

A system for scheduling measurement occasion in an embodiment of the present invention includes: a base station, adapted to reserve HS-DSCH resource for an MS in the Cell_FACH state to perform measurement, deliver the information of the reserved resource to the MS in the Cell_FACH state, and no schedule data to the MS in the Cell_FACH state in the reserved resource; and the MS in the Cell_FACH state, adapted to perform measurement in the reserved resource.

A base station provided in an embodiment of the present invention includes: a resource reserving module, adapted to reserve resource on the HS-DSCH for an MS in the Cell_FACH state to perform measurement; a control information delivering module, adapted to deliver the information of the reserved resource to the MS; and a data scheduling module, adapted to schedule the data delivered through the HS-DSCH to the MS according to the information of the reserved resource.

An MS provided in an embodiment of the present invention includes: a scheduling information receiving module, adapted to receive the information of the reserved resource for the MS in the Cell_FACH state delivered by the base station; and a measuring module, adapted to perform measurement in the reserved resource when the MS is in the Cell_FACH state.

Another method for scheduling measurement occasion in an embodiment of the present invention includes: allocating, by an RNC, an identifier uniquely identifying the MS throughout a cell to the MS in the Cell_FACH state, and delivering the identifier to the base station and the MS in the Cell_FACH state; and determining, by the base station and the MS in the Cell_FACH state respectively according to a pre-agreed scheduling algorithm and the identifier of the MS, measurement occasion for the MS in the Cell_FACH state to perform measurement on the HS-DSCH during which the base station does not schedule data for the MS.

Another system for scheduling measurement occasion in an embodiment of the present invention includes: an RNC, adapted to allocate an identifier uniquely identifying the MS throughout the cell to the MS in the Cell_FACH state, and deliver the identifier to the base station and the MS; a base station, adapted to determine measurement occasion for the MS to perform measurement on the HS-DSCH according to the identifier and a scheduling algorithm pre-agreed with the MS, and not schedule data for the MS on the measurement occasion; and an MS, adapted to determine measurement occasion for performing measurement on the HS-DSCH according to the identifier and a scheduling algorithm pre-agreed with the base station, and perform measurement on the measurement occasion.

Another base station provided in an embodiment of the present invention includes:

an identifier storing module, adapted to store the MS identifier allocated by the RNC uniquely identifying the MS in the Cell_FACH state throughout the cell; a measurement occasion determining module, adapted to determine measurement occasion for the MS to perform measurement on the HS-DSCH according to the identifier allocated by the RNC and the scheduling algorithm pre-agreed with the MS; and a data scheduling module, adapted to schedule data transmission according to the measurement occasion determined by the measurement occasion determining module.

Another MS provided in an embodiment of the present invention includes: a measurement occasion determining module, adapted to determine measurement occasion for an MS in the Cell_FACH state to perform measurement on the HS-DSCH according to an identifier allocated by the RNC and a scheduling algorithm pre-agreed with a base station; and a measuring module, adapted to perform measurement on the measurement occasion.

A method for scheduling measurement occasion in an embodiment of the present invention includes: scheduling, by a base station, resource on the HS-DSCH for an MS in the Cell_FACH state to perform measurement according to an HS-DSCH-RNTI identifier of the MS; and delivering the information of the scheduled resource to the MS.

A method for determining measurement occasion in an embodiment of the present invention includes: receiving, by an MS, a grouping parameter information of measurement occasion for performing measurement from the base station; and determining the measurement occasion according to the received grouping parameter information and an HS-DSCH-RNTI of the MS.

In the embodiments of the present invention, while scheduling resource on the HS-DSCH, the base station reserves resource for the MS in the Cell_FACH state to perform measurement, and delivers the information of the reserved resource to the MS. The MS in the Cell_FACH state uses the reserved resource to perform inter-frequency and/or inter-system measurement, thus preventing the MS in the Cell_FACH state from losing data to be received while performing inter-frequency and/or inter-system measurement.

BRIEF DESCRIPTION OF THE DRAWINGS

Figure 1 is a flowchart of a method for scheduling measurement occasion according to one embodiment of the present invention.

Figure 2 shows an example of how to group the MS(s) in the Cell_FACH state in the coverage of the base station according to one embodiment of the present invention.

Figure 3 shows another example of how to group the MS(s) in the Cell_FACH state in the coverage of the base station according to one embodiment of the present invention.

Figure 4 shows a block diagram of a system for scheduling measurement occasion according to one embodiment of the present invention.

Figure 5 shows a block diagram of a base station according to one embodiment of the present invention.

Figure 6 shows a block diagram of an MS according to one embodiment of the present invention.

Figure 7 is a flowchart of a method for scheduling measurement occasion according to another embodiment of the present invention.

Figure 8 shows a block diagram of a system for scheduling measurement occasion according to another embodiment of the present invention.

Figure 9 shows a block diagram of a base station according to another embodiment of the present invention.

Figure 10 shows a block diagram of an MS according to another embodiment of the present invention.

DETAILED DESCRIPTION

In an embodiment of the present invention, the base station reserves resource for the MS in the Cell_FACH state to perform measurement while scheduling resources for the HS-DSCH, and delivers the information of the reserved resource to the MS. The MS in the Cell_FACH state uses the reserved resource to perform inter-frequency and/or inter-system measurement.

The technical solution under the present invention is hereinafter described in detail by reference to preferred embodiments and accompanying drawings.

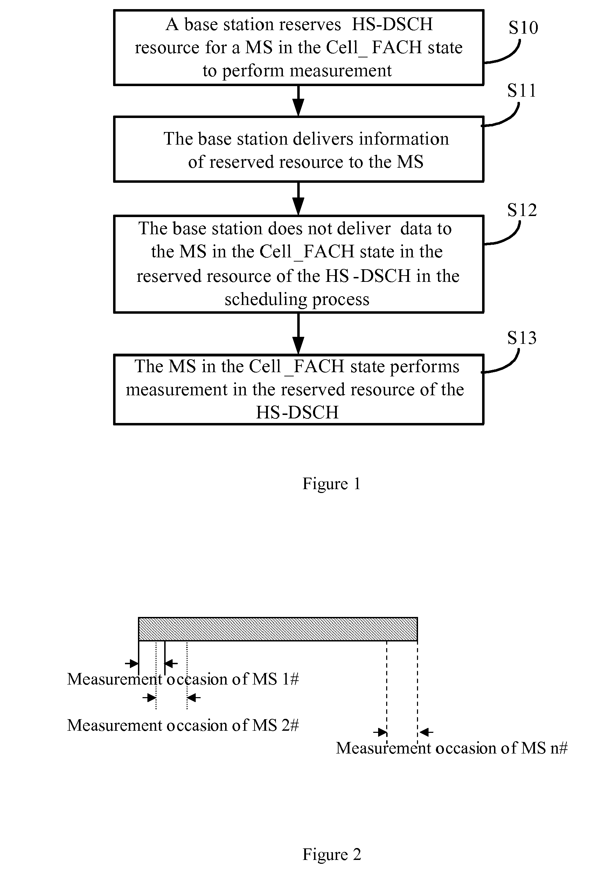

Figure 1 is a flowchart of a method for scheduling measurement occasion according to one embodiment of the present invention. The method may include the following steps:

Step S10: A base station performs resource scheduling for an HS-DSCH, and reserves resource for a MS in Cell_FACH state to perform inter-frequency and/or inter-system measurement. That is, the base station reserves an occasion for the MS in the Cell_FACH state to perform inter-frequency and/or inter-system measurement without transmitting data on the reserved HS-DSCH frame.

The information of the reserved resource specifies the cycle of the reserved resource block (for example, reserving a resource block every n frames or TTIs, where n is a natural number) and the information of the reserved resource blocks (for example, how many frames or TTIs are occupied by the reserved resource blocks).

Preferably, within the reserved resource, the MS(s) in the Cell_FACH state may be grouped so that the measurement actions of all the MS(s) in the Cell_FACH state are distributed onto different locations of the reserved resource. Figure 2 shows an example of how to group the MS(s) in the Cell_FACH state in the coverage of the base station.

Two grouping modes are described below:

Grouping mode 1: By using the MS identifier that uniquely identifies the MS throughout the cell (for example, C-RNTI, or a UMTS Terrestrial Radio Access Network Radio Network Temporary Identifier, which is briefly known as U-RNTI) delivered by the RNC or using the High Speed Downlink Shared Channel Radio Network Temporary Identifier (HS-DSCH-RNTI) of the MS, the base station groups the MS(s) in the Cell_FACH state, and the grouping parameter N is delivered to the MS(s) in the Cell_FACH state through a broadcasted System Information message. Therefore, the MS(s) in the Cell_FACH state knows that the base station divides the reserved resources into N measurement groups.

For example, Group n# = C-RNTI mod N

Based on the identifier (such as C-RNTI) unique throughout the cell and the information of dividing the reserved resources into N measurement groups, the MS calculates according to the foregoing equation and knows that it is incorporated in group n (n = 0,1...N-1). Therefore, according to the information of scheduling the reserved resource obtained from the base station or RNC, namely, the information of a total of N measurement groups, the MS knows that the measurement should be performed in which measurement occasion of the reserved resource.

The grouping parameter may be delivered indirectly. For example, the base station does not deliver the value of N directly, but delivers another parameter k related to the grouping parameter, where k=log2N. After obtaining the k value delivered by the base station, the MS obtains the N value in the foregoing equation.

Grouping mode 2: The grouping parameter of N measurement groups is preset in the MS (This may be implemented with software or hardware), so that the MS knows that the reserved resource is divided into N measurement groups.

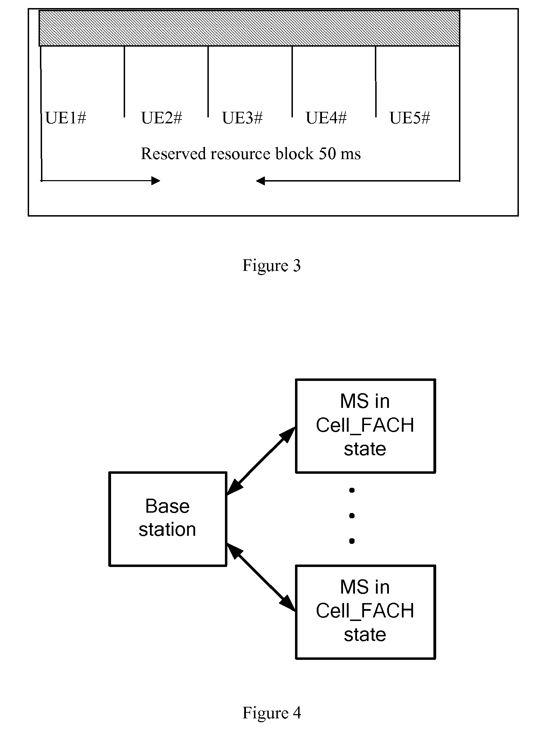

After obtaining the information of the reserved resource and the grouping parameter value, the MS may perform inter-system and/or inter-system measurement in the reserved resource according to the time which is required for measurement. For example, Suppose that the resource reserved by the base station for the MS(s) in the Cell_FACH state is 50 ms, the base station divides the MS(s) into 5 measurement groups (namely, N = 5), and the system requires that the duration of a MS in the Cell_FACH state in performing the inter-frequency and/or inter-system measurement need be 10 ms as a minimum, an example of the grouping and measurement of the MS(s) are shown in Figure 3. Referring to Figure 3, the base station divides the MS(s) in the Cell_FACH state into 5 measurement groups, and the measurement duration of each measurement group is 10 ms.

The measurement duration of one measurement group may be overlapped with the measurement duration of another. As shown in Figure 2, the measurement duration of group 2 begins before end of the measurement duration of group 1.

Step S11: The base station delivers the information of the reserved resource to the MS.

The modes of the base station sending information of the reserved resource to the MS include but are not limited to:

Mode 1: The base station delivers the information of the reserved resource to the MS through a broadcasted System Information message;

Mode 2: The base station reports the information of the reserved resource to the RNC, and the RNC delivers the information of the reserved resource to the MS through a radio resource control message; and

Mode 3: The base station indicates that there is no data delivered to the MS in some subsequent HS-DSCH frames, and the MS can perform inter-frequency and/or inter-system measurement in the period of these HS-DSCH frames without monitoring the HS-SCCH.

Step S12: When receiving data from the RNC, the base station schedules the data onto the HS-DSCH. In the process of scheduling the data, the base station does not schedule data for the MS in the Cell_FACH state in the reserved resource of the HS-DSCH.

Preferably, in this step, the base station may schedule data for the MS in the Cell_DCH state in the reserved resource.

In this step, the base station may schedule data only for the MS in the Cell_FACH state in the non-reserved resource of the HS-DSCH, or schedule data for both the MS in the Cell_FACH state and the MS in the Cell_DCH state in the non-reserved resource of the HS-DSCH.

Step S13: The MS in the Cell_FACH state performs inter-frequency and/or inter-system measurement in the reserved resource of the HS-DSCH.

Preferably, if the MS(s) in the Cell_FACH state are grouped in the foregoing step, the MS(s) in the Cell_FACH perform inter-frequency and/or inter-system measurement in the corresponding measurement occasion according to the grouping parameter.

If the MS(s) in the Cell_FACH state perform inter-frequency and/or inter-system measurement by occupying only part of the reserved source, the MS(s) in the Cell_FACH state are preferably in the discontinuous receiving state in the remaining reserved resource except the measurement occasion in order to reduce power consumption in one embodiment of the present invention.

In one embodiment of the present invention, when scheduling resource, the base station may adjust the size of the reserved resource dynamically according to the utilization of the system resource. For example, compared with the MS which is in the Cell_FACH state and uses the HSDPA resource, the reserved resource block may be smaller if the MS in the Cell_DCH state needs to occupy a relatively small amount of HSDPA resources; or may be larger if the MS in the Cell_DCH state in the current system needs to occupy a relatively high amount of HSDPA resources. Likewise, the repeating cycle of the reserved resource can be adjusted dynamically according to the amount of HSDPA resources occupied by the MS in the system. For example, if the MS in the Cell_DCH state for receiving data from the HS-DSCH in the current system requires a relatively high amount of delivered data, while the MS in the Cell_FACH state for receiving data from the HS-DSCH requires a relatively small amount of delivered data, a 80 ms resource may be reserved every 20 ms for the purpose of transmitting the Cell_DCH data in the 80 ms HS-DSCH frame. In the 20 ms resource, the MS (s) in the Cell_DCH state and the MS(s) in the Cell_FACH state can be scheduled according to the real-time requirement.

A system for scheduling measurement occasion, a base station, and an MS are provided herein corresponding to the method of scheduling measurement occasion according to one embodiment of the present invention.

Figure 4 shows a block diagram of a system for scheduling measurement occasion according to one embodiment of the present invention. The system may include a base station, and one or more MS(s) in the Cell_FACH state.

The base station is adapted to schedule resources for the HS-DSCH, reserve resource for the MS in the Cell_FACH state to perform measurement, deliver the information of the reserved resource to the MS, and not deliver data to the MS in the Cell_FACH state within the reserved resource. In order to prevent the MS(s) in the Cell_FACH state from performing inter-frequency and/or inter-system measurement in a centralized manner, the base station may be further adapted to group the MS(s) in the Cell_FACH state by using the identifier that uniquely identifies the MS throughout the cell (for example, using the C-RNTI or U-RNTI or HS-DSCH-RNTI delivered by the RNC), and deliver the grouping parameter to the MS(s) in the Cell_FACH state through a broadcasted System Information message or in other proper manners.

The MS in the Cell_FACH state is adapted to perform inter-frequency and/or inter-system measurement in the reserved resource of the HS-DSCH. The MS may be further adapted to determine the measurement occasion according to the grouping parameter delivered by the base station or the preset grouping parameter and the MS(s) in different measurement groups perform measurement in different measurement occasions of the reserved resource. In order to reduce power consumption, the MS(s) in the Cell_FACH state may be in the discontinuous receiving state in the remaining reserved resource except the measurement occasion, namely, without monitoring the HS-SCCH within the period of the remaining reserved resource.

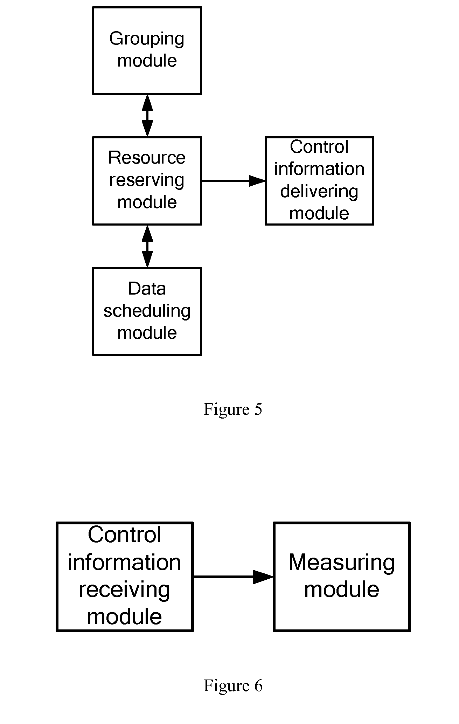

Figure 5 shows a block diagram of a base station according to one embodiment of the present invention. The base station may include a resource reserving module, a control information delivering module and a data scheduling module.

The resource reserving module is adapted to reserve HS-DSCH resource for an MS in the Cell_FACH state to perform measurement. The control information delivering module is adapted to deliver the information of the reserved resource in the resource scheduling module to the MS. The data scheduling module is adapted to schedule data delivered through the HS-DSCH to the MS according to the information of the reserved resource, e.g., not schedule data for the MS in the Cell_FACH state in the reserved resource of the HS-DSCH.

Preferably, in order to prevent the MS(s) in the Cell_FACH state in the coverage perform inter-frequency and/or inter-system measurement in a centralized manner, the base station may further include a grouping module, which is adapted to group the MS(s) in the Cell_FACH state by using the identifier that uniquely identifies the MS throughout the cell and deliver the grouping parameter to the MS(s) in the Cell_FACH state through a broadcasted System Information message or other proper manners.

Figure 6 shows a block diagram of an MS in the Cell_FACH state according to one embodiment of the present invention. The MS may include a control information receiving module and a measuring module.

The control information receiving module is adapted to receive information of the reserved resource, which is used by the MS in the Cell_FACH state to perform measurement, delivered by the base station. The measuring module is adapted to perform measurement within the reserved resource. Preferably, the measuring module may be further adapted to perform inter-frequency and/or inter-system measurement on the measurement occasion corresponding to the grouping parameter delivered by the base station or the preset grouping parameter in the reserved resource of the HS-DSCH.

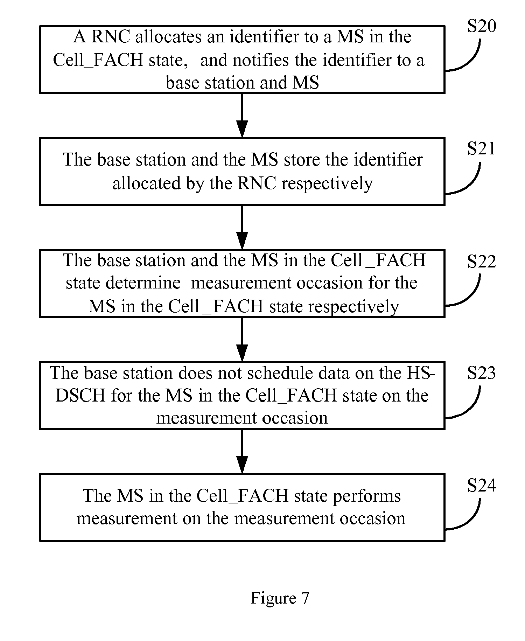

Figure 7 is a flowchart of a method for scheduling measurement occasion according another embodiment of the present invention. The method may include the following steps:

Step S20: An RNC allocates an identifier (for example, C-RNTI or H-RNTI) uniquely identifying a MS throughout the cell to the MS in the Cell_FACH state, and notifies the identifier to a base station and the MS.

Step S21: After receiving the allocated identifier, the base station creates a context for the MS, and stores the identifier allocated by the RNC. After receiving the allocated identifier, the MS in the Cell_FACH state stores the identifier allocated by the RNC.

Step S22: The base station and the MS in the Cell_FACH state determine the HS-DSCH resource for the MS in the Cell_FACH state to perform measurement, namely, determine the measurement occasion respectively according to the scheduling algorithm pre-agreed between the base station and MS and the identifier of the MS in the Cell_FACH state.

For example, the HS-DSCH resource for the MS in the Cell_FACH state to perform inter-frequency and/or inter-system measurement may be determined by using the following scheduling algorithm in the conventional art:

$$\text{SFN div } N = \text{C\_RNTI mod M\_REP} + n * \text{M\_REP}$$

The variables C-RNTI and M_REP in the foregoing equation are known to both the base station and the MS in the Cell_FACH state. Therefore, the base station can schedule data for the MS in the Cell_FACH state, e.g., scheduling data in which frames of the HS-DSCH.

Step S23: The base station does not schedule data on the HS-DSCH for the MS in the Cell_FACH state on the determined measurement occasion.

Step S24: The MS in the Cell_FACH state performs inter-frequency and/or inter-system measurement on the measurement occasion of the HS-DSCH.

A system for scheduling measurement occasion, a base station, and an MS in the Cell_FACH state are provided herein corresponding to the method of scheduling measurement occasion according to another embodiment of the present invention.

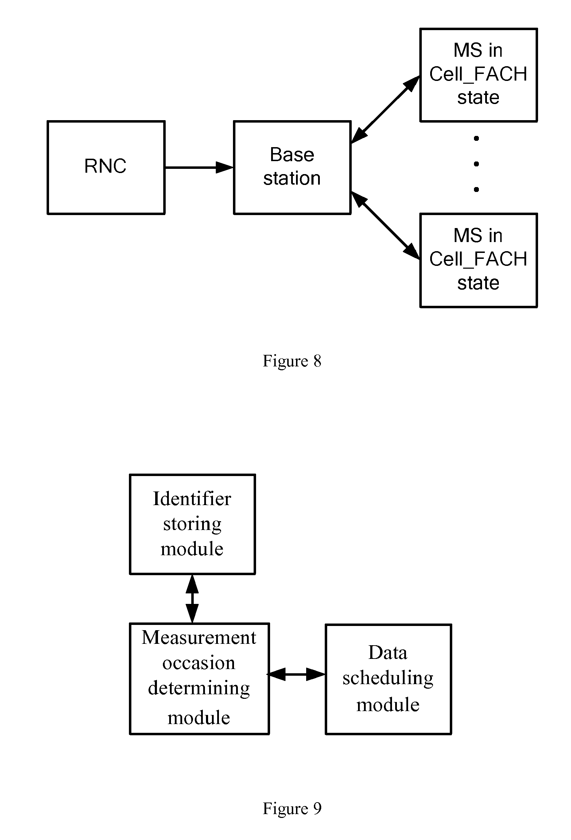

Figure 8 shows a block diagram of a system for scheduling measurement occasion according to another embodiment of the present invention. The system may include: an RNC, a base station, and MS(s) in the Cell_FACH state.

The RNC is adapted to allocate an identifier uniquely identifying the MS throughout the cell to the MS in the Cell_FACH state, and deliver the identifier to the base station and the MS.

The base station is adapted to determine measurement occasion for the MS in the Cell_FACH state to perform measurement on the HS-DSCH according to the identifier of the MS in the Cell_FACH state and a scheduling algorithm pre-agreed with the MS, and not schedule data for the MS in the Cell_FACH state on the measurement occasion.

The MS(s) in the Cell_FACH state are adapted to determine the measurement occasion for performing measurement on the HS-DSCH according to the identifier allocated by the RNC and the scheduling algorithm pre-agreed with the base station, and perform measurement on the determined measurement occasion.

Figure 9 shows a block diagram of a base station according to another embodiment of the present invention. The base station may include an identifier storing module, a measurement occasion determining module and a data scheduling module.

The identifier storing module is adapted to store a MS identifier, which is allocated by the RNC, uniquely identifying the MS in the Cell_FACH state throughout the cell.

The measurement occasion determining module is adapted to determine measurement occasion for the MS in the Cell_FACH state to perform measurement on the HS-DSCH according to the identifier allocated by the RNC and the scheduling algorithm pre-agreed with the MS.

The data scheduling module is adapted to not deliver data to the MS in the Cell_FACH state on the measurement occasion of the HS-DSCH according to the measurement occasion determined by the measurement occasion determining module.

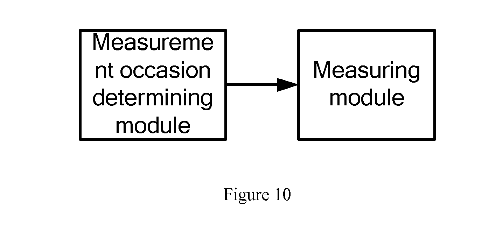

Figure 10 shows a block diagram of an MS in the Cell_FACH state according to another embodiment of the present invention. The MS may include a measurement occasion determining module and a measuring module.

The measurement occasion determining module is adapted to determine measurement occasion for performing measurement on the HS-DSCH according to the identifier allocated by the RNC and a scheduling algorithm pre-agreed with the base station.

The measuring module is adapted to perform measurement on the measurement occasion.

In an embodiment of the present invention, the base station reserves resource for the MS in the Cell_FACH state to perform measurement while scheduling the resource for the HS-DSCH, and delivers the information of the reserved resource to the MS. The MS in the Cell_FACH state uses the reserved resource to perform inter-frequency and/or inter-system measurement, thus preventing the MS in the Cell_FACH state from losing data to be received while performing inter-frequency and/or inter-system measurement.

Although the invention has been described through some exemplary embodiments, the invention is not limited to such embodiments. It is apparent that those skilled in the art can make various modifications and variations to the present invention without departing from the scope of the present invention. The present invention is intended to cover these modifications and variations provided that they fall in the scope of protection defined by the following claims or their equivalents.

**Claims**

**1.** A method for scheduling measurement occasion, comprising:

reserving, by a base station, resource on a High Speed Downlink Shared Channel, HS-DSCH, for a Mobile Station, MS, in a Cell_Forward Access Channel, Cell_FACH, state to perform measurement;
delivering, by the base station, information of the reserved resource to the MS in the Cell_FACH state; and
not scheduling, by the base station, data for the MS in the Cell_FACH state in the reserved resource.

**2.** The method of claim 1, further comprising:

performing, by the MS in the Cell_FACH state, measurement in the reserved resource.

**3.** The method of claim 1, wherein
delivering, by the base station, the information of the reserved resource to the MS through a broadcasted System Information message; or
reporting, by the base station, the information of the reserved resource to a Radio Network Controller, RNC, so as to deliver the information of the reserved resource to the MS through a radio resource control message by the RNC; or
delivering, by the base station, the information of the reserved resource to the MS through a High Speed Shared Control Channel, HS-SCCH.

**4.** The method of claim 1, wherein the resource reserved for performing measurement is resource for performing inter-frequency and/or inter-system measurement.

**5.** The method of claim 1, wherein the base station schedules data for the MS in a Cell_Dedicated Channel, Cell_DCH, state in the reserved resource.

**6.** The method of claim 1, further comprising:

scheduling, by the base station, data only for the MS in the Cell_FACH state in non-reserved resources of the HS-DSCH; or
scheduling, by the base station, data for both the MS in the Cell_FACH state and the MS in the Cell_Dedicated Channel, Cell_DCH, state.

**7.** The method of claim 1, further comprising:

grouping, by the base station, the MS in the Cell_FACH state according to an identifier that uniquely identifies the MS throughout a cell;
delivering, by the base station, a grouping parameter to the MS in the Cell_FACH state, or presetting the grouping parameter in the MS in the Cell_FACH state; and

determining, by the MS in the Cell_FACH state, measurement occasion for the MS to perform measurement according to the grouping parameter and the information of the reserved resource.

8. The method of claim 7, wherein the identifier that uniquely identifies the MS throughout the cell is a Cell-Radio Network Temporary Identifier, C-RNTI, or a UMTS Terrestrial Radio Access Network Radio Network Temporary Identifier, U-RNTI, or a High Speed Downlink Shared Channel Radio Network Temporary Identifier, HS-DSCH-RNTI.

9. The method of claim 7, wherein the MS in the Cell_FACH state is in a discontinuous receiving state in remaining reserved resource except the measurement occasion.

10. A system for scheduling measurement occasion, comprising:

   a base station, adapted to reserve High Speed Downlink Shared Channel, HS-DSCH, resource for a MS in a Cell_FACH state to perform measurement, and deliver information of the reserved resource to the MS in the Cell_FACH state, and not schedule data to the MS in the Cell_FACH state in the reserved resource; and
   a MS in the Cell_FACH state, adapted to perform measurement in the reserved resource.

11. The system of claim 10, wherein the base station is further adapted to group the MS in the Cell_FACH state according to an identifier that uniquely identifies the MS throughout a cell, and deliver a grouping parameter to the MS in the Cell_FACH state.

12. The system of claim 10, wherein the MS in the Cell_FACH state is further adapted to preset the grouping parameter.

13. The system of claim 11 or claim 12, wherein the MS in the Cell_FACH state is further adapted to determine measurement occasion according to the grouping parameter, and perform inter-frequency and/or inter-system measurement on the measurement occasion.

14. A base station, comprising:

   a resource reserving module, adapted to reserve resource on a High Speed Downlink Shared Channel, HS-DSCH, for a Mobile Station, MS, in a Cell_Forward Access Channel, Cell_FACH, state to perform measurement;
   a control information delivering module, adapted to deliver information of the reserved resource to the MS in the Cell_FACH state; and
   a data scheduling module, adapted to schedule data delivered through the HS-DSCH to the MS according to the information of the reserved resource.

15. The base station of claim 14, wherein the data scheduling module is adapted to no schedule data to the MS in the Cell_FACH state in the reserved resource.

16. The base station of claim 14, further comprising:

   a grouping module, adapted to group the MS in the Cell_FACH state according to an identifier that uniquely identifies the MS throughout a cell, and deliver a grouping parameter to the MS in the Cell_FACH state.

17. A Mobile Station, MS, comprising:

   a scheduling information receiving module, adapted to receive information of reserved resource from a base station, wherein the reserved resource is used by the MS to perform measurement in a Cell_Forward Access Channel, Cell_FACH, state; and
   a measuring module, adapted to perform measurement in the reserved resource when the MS is in the Cell_FACH state.

18. The MS of claim 17, wherein the measuring module is adapted to determine measurement occasion according to a grouping parameter delivered by the base station or a preset grouping parameter, and perform inter-frequency and/or inter-system measurement on the measurement occasion.

19. A method for scheduling measurement occasion, comprising:

allocating, by a Radio Network Controller, RNC, an identifier uniquely identifying a Mobile Station, MS, throughout a cell to the MS in a Cell_Forward Access Channel, Cell_FACH, state, and delivering the identifier to a base station and the MS in the Cell_FACH state; and

determining, by the base station and the MS in the Cell_FACH state, respectively according to a pre-agreed scheduling algorithm and the identifier of the MS, measurement occasion for the MS in the Cell_FACH state to perform measurement on a High Speed Downlink Shared Channel, HS-DSCH, during which the base station does not schedule data for the MS.

20. The method of claim 19, wherein the MS in the Cell_FACH state performs the measurement on the measurement occasion.

21. The method of claim 19, wherein the measurement occasion for the MS to perform measurement on the HS-DSCH is the measurement occasion of performing inter-frequency and/or inter-system measurement.

22. A system for scheduling measurement occasion, comprising:

a Radio Network Controller, RNC, adapted to allocate an identifier uniquely identifying a Mobile Station, MS, throughout a cell to the MS in a Cell_Forward Access Channel, Cell_FACH, state, and deliver the identifier to a base station and the MS;

the base station, adapted to determine measurement occasion for the MS to perform measurement on a High Speed Downlink Shared Channel, HS-DSCH, according to the identifier and a scheduling algorithm pre-agreed with the MS, and not schedule data for the MS on the measurement occasion; and

the MS, adapted to determine the measurement occasion for performing the measurement on the HS-DSCH according to the identifier and the scheduling algorithm pre-agreed with the base station, and perform measurement on the measurement occasion.

23. A base station, comprising:

an identifier storing module, adapted to store a Mobile Station, MS, identifier, which is allocated by a Radio Network Controller, RNC, uniquely identifying the MS in a Cell_Forward Access Channel, Cell_FACH, state throughout a cell;

a measurement occasion determining module, adapted to determine measurement occasion for the MS to perform measurement on a High Speed Downlink Shared Channel, HS-DSCH, according to the identifier allocated by the RNC and a scheduling algorithm pre-agreed with the MS; and

a data scheduling module, adapted to schedule data transmission according to the measurement occasion determined by the measurement occasion determining module.

24. A Mobile Station, MS, comprising:

a measurement occasion determining module, adapted to determine measurement occasion for a Mobile Station, MS, in a Cell_Forward Access Channel, Cell_FACH, state to perform measurement on a High Speed Downlink Shared Channel, HS-DSCH, according to an identifier allocated by a Radio Network Controller, RNC, and a scheduling algorithm pre-agreed with a base station; and

a measuring module, adapted to perform measurement on the measurement occasion.

25. A method for scheduling measurement occasion, comprising:

scheduling, by a base station, resource on a High Speed Downlink Shared Channel, HS-DSCH, for a Mobile Station, MS, in a Cell_Forward Access Channel, Cell_FACH, state to perform measurement according to a High Speed Downlink Shared Channel Radio Network Temporary Identifier, HS-DSCH-RNTI, of the MS; and

delivering, by the base station, information of the scheduled resource to the MS.

26. The method of claim 25, wherein during a process of scheduling the resource for the MS in the Cell_FACH state to perform measurement according to the HS-DSCH-RNTI identifier of the MS, the information of the scheduled resource is determined, and measurement occasion for performing measurement is determined according to the HS-DSCH-RNTI and the information of the scheduled resource, wherein the information of the scheduled resource comprises a grouping parameter.

27. The method of claim 25, wherein the resource for performing measurement comprises an HS-DSCH radio frame for performing inter-frequency and/or inter-system measurement.

28. A method for determining measurement occasion, comprising:

receiving, by a Mobile Station, MS, a grouping parameter information of measurement occasion for performing measurement from a base station; and
determining, by the MS, the measurement occasion according to the received grouping parameter information and a High Speed Downlink Shared Channel Radio Network Temporary Identifier, HS-DSCH-RNTI, of the MS.

A base station reserves HS-DSCH resource for a MS in the Cell_FACH state to perform measurement    S10

The base station delivers information of reserved resource to the MS    S11

The base station does not deliver data to the MS in the Cell_FACH state in the reserved resource of the HS-DSCH in the scheduling process    S12

The MS in the Cell_FACH state performs measurement in the reserved resource of the HS-DSCH    S13

Figure 1

Measurement occasion of MS 1#

Measurement occasion of MS 2#

Measurement occasion of MS n#

Figure 2

UE1#  UE2#  UE3#  UE4#  UE5#

Reserved resource block 50 ms

Figure 3

MS in Cell_FACH state

Base station

MS in Cell_FACH state

Figure 4

```
          ┌──────────┐
          │ Grouping │
          │  module  │
          └────┬─────┘
               ↕
          ┌──────────┐        ┌──────────────┐
          │ Resource │        │   Control    │
          │ reserving│───────▶│ information  │
          │  module  │        │  delivering  │
          └────┬─────┘        │    module    │
               ↕              └──────────────┘
          ┌──────────┐
          │   Data   │
          │scheduling│
          │  module  │
          └──────────┘
```

Figure 5

```
   ┌──────────────┐        ┌──────────────┐
   │   Control    │        │              │
   │ information  │        │  Measuring   │
   │  receiving   │───────▶│    module    │
   │    module    │        │              │
   └──────────────┘        └──────────────┘
```

Figure 6

```
A RNC allocates an identifier to a MS in the          S20
Cell_FACH state,  and notifies the identifier to a
             base station and MS

                    ↓

The base station and the MS store the identifier       S21
        allocated by the RNC respectively

                    ↓

The base station and the MS in the Cell _FACH          S22
  state determine  measurement occasion for the
   MS in the Cell_FACH state respectively

                    ↓

The base station does not schedule data on the HS-     S23
   DSCH for the MS in the Cell_FACH state on the
             measurement occasion

                    ↓

The MS in the Cell_FACH state performs                 S24
  measurement on the measurement occasion
```

Figure 7

Figure 8

Figure 9

Figure 10

# INTERNATIONAL SEARCH REPORT

International application No.

PCT/CN2008/000052

**A. CLASSIFICATION OF SUBJECT MATTER**

H04Q 7/34 (2006.01)i

According to International Patent Classification (IPC) or to both national classification and IPC

**B. FIELDS SEARCHED**

Minimum documentation searched (classification system followed by classification symbols)

IPC: H04Q, H04L, H04B

Documentation searched other than minimum documentation to the extent that such documents are included in the fields searched

Electronic data base consulted during the international search (name of data base and, where practicable, search terms used)

CPRS, CNKI, WPI, EPODOC, PAJ, IEEE: measure+, occasion?, interval?, slot?, gap?, inter w frequenc+, different w frequenc+, send+, transmit+, interrupt+, halt+, non w continu+, discontinu+, base w station, node w B, identify+, ID, flag?

**C. DOCUMENTS CONSIDERED TO BE RELEVANT**

| Category* | Citation of document, with indication, where appropriate, of the relevant passages | Relevant to claim No. |
|---|---|---|
| X | CN1406446A (NOKIA CORP) 26 Mar. 2003 (26.03.2003) Pages 3-4 of the description, claims 1-19 | 1-3,5-6,9-10,12,14-15,17,24-28 |
| Y | | 4,7-8,11,13,16,18 |
| X | US2001022782A1 (NOKIA CORP) 20 Sept. 2001 (20.09.2001) Paragraphs [0011]-[0016] of the description, claims 1-15 | 1-3,5-6,9-10,12,14-15,17,24-28 |
| Y | | 4,7-8,11,13,16,18 |
| PX | CN101043708A (DA TANG MOBILE COMMUNICATIONS EQUIP CO) 26 Sept. 2007 (26.09.2007) Pages 2-8 of the description, claims 1-17, figures 2-3 | 1-3,5-6,9-10,12,14-15,17,24-28 |
| Y | | 4,7-8,11,13,16,18 |
| Y | CN1879334A (MOTOROLA INC) 13 Dec. 2006 (13.12.2006) Pages 1-2, 8-10 of the description | 4,7-8,11,13,16,18 |
| A | CN1371585A (ERICSSON TELEFON AB L M) 25 Sept. 2002 (25.09.2002) The whole document | 1-28 |
| A | CN1371587A (ERICSSON TELEFON AB L M) 25 Sept. 2002 (25.09.2002) The whole document | 1-28 |

☐ Further documents are listed in the continuation of Box C.   ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 01 April 2008 (01.04.2008) | **17 Apr. 2008 (17.04.2008)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 | LV,Sihua |
| | Telephone No. (86-10)62411386 |

Form PCT/ISA/210 (second sheet) (April 2007)

## INTERNATIONAL SEARCH REPORT
Information on patent family members

International application No.

PCT/CN2008/000052

| Patent Documents referred in the Report | Publication Date | Patent Family | Publication Date |
|---|---|---|---|
| CN1406446A | 26.03.2003 | WO0165882A1 | 07.09.2001 |
| | | FI20000463A | 30.08.2001 |
| | | AU3932401A | 12.09.2001 |
| | | US2002006119A1 | 17.01.2002 |
| | | EP1264505A1 | 11.12.2002 |
| | | BRPI0108707A | 26.11.2002 |
| | | ZA200206881A | 30.04.2003 |
| | | KR20030007443A | 23.01.2003 |
| | | JP2003525555T | 26.08.2003 |
| | | FI112562B B1 | 15.12.2003 |
| | | EP1264505B1 | 14.04.2004 |
| | | DE60102808E E | 19.05.2004 |
| | | ES2219514T T3 | 01.12.2004 |
| | | JP3682024B2 | 10.08.2005 |
| | | CA2399195C | 09.05.2006 |
| | | CN1206876C | 15.06.2005 |
| | | US7133382B2 | 07.11.2006 |
| | | KR100554513B B1 | 03.03.2006 |
| | | AT264601T | 15.04.2004 |
| | | TR200401719T T4 | 23.08.2004 |
| | | DE60102808D D1 | 19.05.2004 |
| US2001022782A1 | 20.09.2001 | EP1137203A2 | 26.09.2001 |
| | | FI20000380A | 19.08.2001 |
| | | FI112772B B1 | 31.12.2003 |
| | | US6810019B2 | 26.10.2004 |
| CN101043708A | 26.09.2007 | None | |
| CN1879334A | 13.12.2006 | US2005100037A1 | 12.05.2005 |
| | | WO2005048466A2 | 26.05.2005 |
| | | EP1683286A2 | 26.07.2006 |
| | | MXPA06005173A | 01.08.2006 |
| | | KR20060107771A | 16.10.2006 |
| CN1371585A | 25.09.2002 | EP1081979A1 | 07.03.2001 |
| | | WO0117307A1 | 08.03.2001 |
| | | AU6572000A | 26.03.2001 |

Form PCT/ISA/210 (patent family annex) (April 2007)

## INTERNATIONAL SEARCH REPORT
Information on patent family members

| International application No. |
| --- |
| PCT/CN2008/000052 |

| Patent Documents referred in the Report | Publication Date | Patent Family | Publication Date |
| --- | --- | --- | --- |
| | | EP1208712A1 | 29.05. 2002 |
| | | KR20020026610A | 10.04. 2002 |
| | | JP2003508991T | 04.03. 2003 |
| | | ZA200200739A | 26.03. 2003 |
| | | EP1208712B1 | 02.05. 2003 |
| | | DE60002479E E | 05.06. 2003 |
| | | TW521532A | 21.02. 2003 |
| | | MXPA02002015A | 20.08. 2002 |
| | | AU766725B | 23.10. 2003 |
| | | MX224161B | 12.11. 2004 |
| | | US7016320B1 | 21.03. 2006 |
| | | CN1193638C | 16.03. 2005 |
| | | INMUMNP200200106E E | 05.05. 2006 |
| | | INMUMNP200501110E E | 05.05. 2006 |
| | | AT239344T | 15.05. 2003 |
| | | TW521532B | 21.02. 2003 |
| | | DE60002479D D1 | 05.06. 2003 |
| | | DE60002479T T2 | 18.03. 2004 |
| CN1371587A | 25.09.2002 | EP1081978A1 | 07.03. 2001 |
| | | WO0117305A1 | 08.03. 2001 |
| | | AU6995100A | 26.03. 2001 |
| | | EP1206891A1 | 22.05. 2002 |
| | | JP2003508990T | 04.03. 2003 |
| | | AT385658T | 15.02. 2008 |

Form PCT/ISA/210 (patent family annex) (extra sheet) (April 2007)